# EUROPÄISCHE PATENTANMELDUNG

(11) **EP 3 715 174 A1**
(43) Veröffentlichungstag der Anmeldung: **30.09.2020**
(21) Anmeldenummer: 20164287.3
(22) Anmeldetag: 19.03.2020
(51) Int. Cl.: B60N 2/64

(54) **SITZPOLSTER UND SITZ**

(30) Priorität: 25.03.2019 DE 102019107594
(71) Anmelder: Bärle, Manfred, 88213 Ravensburg (DE)
(72) Erfinder: Bärle, Manfred, 88213 Ravensburg (DE)
(74) Vertreter: Otten, Roth, Dobler & Partner mbB Patentanwälte

(57) **Zusammenfassung**

Vorgeschlagen wird ein Sitzpolster 1, umfassend eine Grundfläche 2 und eine Sitzfläche 3, wobei das Sitzpolster 1 eine aus einem Abstand von Grundfläche 2 und Sitzfläche 3 gebildete Erhebung 4 mit einer Höhe 14 aufweist, wobei die Sitzfläche 3 ein erstes Ende 5 aufweist, das ein hinteres Ende der Sitzfläche 3 definiert und ein zweites Ende 6 aufweist, das ein vorderes Ende der Sitzfläche 3 definiert, wobei das erste Ende 5 und das zweite Ende 6 eine Längserstreckung 15 der Sitzfläche 3 definieren, wobei die Sitzfläche 3 in einer Schnittansicht, vorzugsweise Längsschnittansicht, eine sich aus der Höhe der Erhebung 4 ergebende und vom ersten Ende 5 zum zweiten Ende 6 verlaufende Höhenlinie 7 aufweist, wobei die Höhenlinie 7 im Wesentlichen S-förmig ausgebildet ist.

## Beschreibung

Die Erfindung betrifft ein Sitzpolster nach dem Oberbegriff des Anspruchs 1. Weiterhin betrifft die Erfindung einen Sitz gemäß Anspruch 11.

Sitzpolster und Sitze sind aus dem Stand der Technik bekannt. Nachteilig ist oftmals, dass Benutzer der bekannten Sitzpolster bzw. Sitze ergonomisch ungünstige Sitzpositionen einnehmen können, wodurch nachhaltig auftretende körperliche Beschwerden auftreten können.

Aufgabe der Erfindung ist es daher, ein Sitzpolster bzw. einen Sitz mit verbesserter Ergonomie bereitzustellen, um ein körperschonendes Sitzes zu ermöglichen.

Ausgehend von einem Sitzpolster, umfassend eine Grundfläche und eine Sitzfläche, wobei das Sitzpolster eine aus einem Abstand von Grundfläche und Sitzfläche gebildete Erhebung mit einer Höhe aufweist, wobei die Sitzfläche ein erstes Ende aufweist, das ein hinteres Ende der Sitzfläche definiert und ein zweites Ende aufweist, das ein vorderes Ende der Sitzfläche definiert, wobei das erste Ende und das zweite Ende eine Längserstreckung der Sitzfläche definieren, wobei die Sitzfläche in einer Schnittansicht, vorzugsweise Längsschnittansicht, eine sich aus der Höhe der Erhebung ergebende und vom ersten Ende zum zweiten Ende verlaufende Höhenlinie aufweist, ist erfindungsgemäß vorgesehen, dass die Höhenlinie im Wesentlichen S-förmig ausgebildet ist.

Diese S-förmige Ausgestaltung kann insbesondere bei längerem Verweilen eines Benutzers auf dem Sitzpolster signifikante Entlastung des Beckens bzw. der Hüfte ermöglichen und somit ein besonders körperschonendes Sitzen des Benutzers ermöglichen.

Eine Weiterbildung der Erfindung kann vorsehen, dass die Sitzfläche zwei Bereiche mit jeweils unterschiedlichem Verlauf der Höhenlinie aufweist, wobei die Höhenlinie in einem ersten Bereich als überwiegend fallende Höhenlinie ausgebildet und in einem zweiten Bereich als zumindest teilweise steigende Höhenlinie ausgebildet ist.

Hierdurch kann die Entlastung insbesondere von Becken bzw. Hüfte eines Benutzers weiterhin entlastet werden, wodurch die Ergonomie des Sitzpolsters verbessert werden kann.

Um die Entlastung insbesondere von Becken bzw. Hüfte eines Benutzers zusätzlich zu erhöhen und damit einhergehend die Ergonomie des Sitzpolsters zusätzlich zu verbessern, kann in einer weiteren Ausgestaltung der Erfindung vorgesehen sein, dass die Sitzfläche einen dritten Bereich umfasst, der an den zweiten Bereich anschließt, wobei der dritte Bereich einen Verlauf der Höhenlinie aufweist, in dem die Höhenlinie als der überwiegend fallende Höhenlinie ausgebildet ist, derart, dass der dritte Bereich als abgerundeter Bereich an dem vorderen Ende der Sitzfläche ausgebildet ist.

Zur zusätzlichen Fixierung insbesondere des Beckens eines Benutzers, kann in einer bevorzugten Ausgestaltung der Erfindung vorgesehen sein, dass zwischen dem ersten Bereich und dem zweiten Bereich eine Mulde ausgebildet ist.

Eine Weiterbildung der Erfindung kann vorsehen, dass das Sitzpolster eine maximale Höhe an dem hinteren Ende aufweist. Hierdurch wird quasi eine Stützkante an dem hinteren Ende ausgebildet, wodurch das Becken eines Benutzers wirksam abgestützt werden kann.

Eine zusätzliche Erhöhung des Sitzkomforts kann dadurch erreichbar sein, dass das Sitzpolster einen offenporigen Schaumstoff umfasst, vorzugsweise aus einem offenporigen Schaumstoff gefertigt ist.

Verbesserter Halt eines Benutzers beim Sitzen kann dadurch erreichbar sein, dass das Sitzpolster einen vorzugsweise rutschfesten Bezug umfasst. Ein Bezug ist überdies vorteilhaft, da er besonders einfach zu reinigen ist. Beispielsweise kann ein Bezug aus Leder oder aus Stoff oder aus einer Kombination aus Leder und Stoff bestehen.

In einer weiteren vorteilhaften Ausgestaltung kann die Erfindung vorsehen, dass das Sitzpolster eine Deckschicht aus vorzugsweise wattiertem Material umfasst, wobei die Deckschicht auf einer Oberseite des Sitzpolsters angeordnet ist. Diese Deckschicht kann den Sitzkomfort für einen Benutzer zusätzlich erhöhen und weist ferner den Vorteil auf, leicht gereinigt werden zu können. Insbesondere ist die Deckschicht auf einer Oberseite der Sitzfläche angeordnet.

Die Erfindung kann in einer bevorzugten Ausgestaltung auch vorsehen, dass das Sitzpolster wenigstens eine seitliche Begrenzung, vorzugsweise zwei seitliche Begrenzungen, aufweist, die vorzugsweise als hochgezogene Seitenwangen ausgebildet ist bzw. sind. Hierdurch kann eine stabile Sitzposition eines Benutzers ermöglicht werden, wodurch entsprechender Sitzkomfort unter Wahrung besonders körperschonender Haltung des Benutzers beim Verweilen auf dem Sitzpolster erhöht werden kann.

Zur Fixierung und damit zum verbesserten Halt des Sitzpolsters kann im Rahmen der Erfindung auch möglich sein, dass das Sitzpolster wenigstens ein Fixiermittel umfasst.

Die Erfindung betrifft weiterhin einen Sitz, insbesondere Kraftfahrzeugsitz, wenigstens umfassend ein Sitzgestell sowie wenigstens ein Sitzpolster. Erfindungsgemäß ist das Sitzpolster dabei als das vorliegend erfindungsgemäße Sitzpolster ausgebildet. Die vorstehend genannten Vorteile gelten in gleicher Weise für einen Sitz, der ein entsprechendes Sitzpolster umfasst. Insbesondere kann bei längerem Verweilen signifikante Entlastung des Beckens bzw. der Hüfte des Benutzers ermöglicht werden und somit für den Benutzer ein besonders körperschonendes Sitzen auf dem Sitz ermöglicht werden.

In einer bevorzugten Weiterbildung kann die Erfindung vorsehen, dass das wenigstens eine Sitzpolster als integraler Bestandteil des Fahrzeugsitzes ausgebildet ist und insbesondere in dem Fahrzeugsitz eingenäht ist. Ein derartiger Sitz weist beim Sitzen erhöhte Stabilität auf, da das Sitzpolster im Wesentlichen ortsfest bleibt.

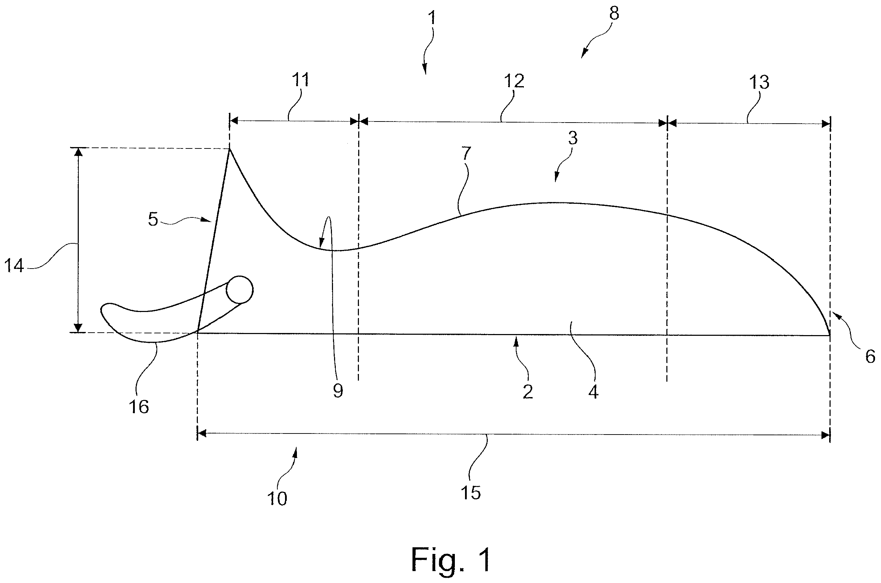

Nachfolgend wird die Erfindung anhand einer Zeichnung näher beschrieben. Hierbei zeigt die einzige Figur 1 in stark vereinfachter schematischer Darstellung eine Ausführungsform eines erfindungsgemäßen Sitzpolsters in einer Längsschnittansicht.

Es ist ersichtlich, dass das Sitzpolster 1 eine Grundfläche 2 und eine Sitzfläche 3 umfasst, wobei das Sitzpolster 1 eine aus einem Abstand von Grundfläche 2 und Sitzfläche 3 gebildete Erhebung 4 mit einer Höhe 14 aufweist. Die Sitzfläche 3 weist ein erstes Ende 5 auf, das ein hinteres Ende der Sitzfläche 3 definiert. Die Sitzfläche 3 weist ein zweites Ende 6 auf, das ein vorderes Ende der Sitzfläche 3 definiert. Das erste Ende 5 und das zweite Ende 6 definieren eine Längserstreckung 15 der Sitzfläche 3. die Sitzfläche 3 weist in Längsschnittansicht eine sich aus der Höhe 14 der Erhebung 4 ergebende und vom ersten Ende 5 zum zweiten Ende 6 verlaufende Höhenlinie 7 auf.

Zudem ist ersichtlich, dass die Höhenlinie 7 in der dargestellten Schnittansicht im Wesentlichen S-förmig ausgebildet ist.

Die Sitzfläche 3 weist eine Oberseite 8 und eine der Oberseite abgewandte Unterseite 10 auf. Ein Benutzer sitzt auf der Oberseite 8.
die Sitzfläche 3 weist Bereiche mit jeweils unterschiedlichem Verlauf der Höhenlinie 7 auf, wobei die Höhenlinie 7 in einem ersten Bereich 11 als überwiegend fallende Höhenlinie 7 ausgebildet und in einem zweiten Bereich 12 als zumindest teilweise steigende Höhenlinie 7 ausgebildet ist. Die Sitzfläche 3 umfasst einen dritten Bereich 13, der an den zweiten Bereich 12 anschließt. Der dritte Bereich 13 weist einen Verlauf der Höhenlinie 7 auf, in dem die Höhenlinie 7 als überwiegend fallende Höhenlinie 7 ausgebildet ist, derart, dass der dritte Bereich 13 als abgerundeter Bereich an dem vorderen Ende der Sitzfläche 3 ausgebildet ist.

Es ist zudem ersichtlich, dass zwischen dem ersten Bereich 11 und dem zweiten Bereich 12 eine Mulde 9 ausgebildet ist.

Erkennbar ist zudem, dass das Sitzpolster 1 eine maximale Höhe 14 an dem hinteren Ende des Sitzpolsters 1 aufweist.

Im Ausführungsbeispiel umfasst das Sitzpolster 1 ein Fixiermittel 16.

In nicht näher dargestellter Art und Weise ist das Sitzpolster 1 für einen Sitz vorgesehen. Möglich kann sein, dass das Sitzpolster in einem Sitz (nicht gezeigt) angeordnet ist.

### Bezugszeichenliste:

- 1: Sitzpolster
- 2: Grundfläche
- 3: Sitzfläche
- 4: Erhebung
- 5: erstes Ende
- 6: zweites Ende
- 7: Höhenlinie
- 8: Oberseite
- 9: Mulde
- 10: Unterseite (des Sitzpolsters)
- 11: erster Bereich
- 12: zweiter Bereich
- 13: dritter Bereich
- 14: Höhe
- 15: Längserstreckung
- 16: Fixiermittel

## Patentansprüche

1. Sitzpolster (1), umfassend eine Grundfläche (2) und eine Sitzfläche (3), wobei das Sitzpolster (1) eine aus einem Abstand von Grundfläche (2) und Sitzfläche (3) gebildete Erhebung (4) mit einer Höhe (14) aufweist, wobei die Sitzfläche (3) ein erstes Ende (5) aufweist, das ein hinteres Ende der Sitzfläche (3) definiert und ein zweites Ende (6) aufweist, das ein vorderes Ende der Sitzfläche (3) definiert, wobei das erste Ende (5) und das zweite Ende (6) eine Längserstreckung (15) der Sitzfläche (3) definieren, wobei die Sitzfläche (3) in einer Schnittansicht, vorzugsweise Längsschnittansicht, eine sich aus der Höhe (14) der Erhebung (4) ergebende und vom ersten Ende (5) zum zweiten Ende (6) verlaufende Höhenlinie (7) aufweist,
**dadurch gekennzeichnet, dass**
die Höhenlinie (7) im Wesentlichen S-förmig ausgebildet ist.

2. Sitzpolster (1) nach Anspruch 1, **dadurch gekennzeichnet, dass** die Sitzfläche (3) Bereiche mit jeweils unterschiedlichem Verlauf der Höhenlinie (7) aufweist, wobei die Höhenlinie (7) in einem ersten Bereich (11) als überwiegend fallende Höhenlinie (7) ausgebildet und in einem zweiten Bereich (12) als zumindest teilweise steigende Höhenlinie (7) ausgebildet ist.

3. Sitzpolster (1) nach Anspruch 2, **dadurch gekennzeichnet, dass** die Sitzfläche (3) einen dritten Bereich (13) umfasst, der an den zweiten Bereich (12) anschließt, wobei der dritte Bereich (13) einen Verlauf der Höhenlinie (7) aufweist, in dem die Höhenlinie (7) als überwiegend fallende Höhenlinie (7) ausgebildet ist, derart, dass der dritte Bereich (13) als abgerundeter Bereich an dem vorderen Ende der Sitzfläche (3) ausgebildet ist.

4. Sitzpolster (1) nach Anspruch 2 oder 3, **dadurch gekennzeichnet, dass** zwischen dem ersten Bereich (11) und dem zweiten Bereich (12) eine Mulde (9) ausgebildet ist.

5. Sitzpolster (1) nach einem der vorangehenden Ansprüche 1 bis 4, **dadurch gekennzeichnet, dass** das Sitzpolster (1) eine maximale Höhe (14) an dem hinteren Ende des Sitzpolsters (1) aufweist.

6. Sitzpolster (1) nach einem der vorangehenden Ansprüche, **dadurch gekennzeichnet, dass** das Sitzpolster (1) einen offenporigen Schaumstoff umfasst, vorzugsweise aus einem offenporigem Schaumstoff gefertigt ist.

7. Sitzpolster (1) nach einem der vorangehenden Ansprüche, **dadurch gekennzeichnet, dass** das Sitzpolster (1) einen vorzugsweise rutschfesten Bezug umfasst.

8. Sitzpolster (1) nach einem der vorangehenden Ansprüche, **dadurch gekennzeichnet, dass** das Sitzpolster (1) eine Deckschicht aus vorzugsweise wattiertem Material umfasst, wobei die Deckschicht auf einer Oberseite (8) des Sitzpolsters (1) angeordnet ist.

9. Sitzpolster (1) nach einem der vorangehenden Ansprüche, **dadurch gekennzeichnet, dass** das Sitzpolster (1) wenigstens eine seitliche Begrenzung, vorzugsweise zwei seitliche Begrenzungen, aufweist, die vorzugsweise als hochgezogene Seitenwangen ausgebildet ist bzw. sind.

10. Sitzpolster (1) nach einem der vorangehenden Ansprüche, **dadurch gekennzeichnet, dass** das Sitzpolster (1) wenigstens ein Fixiermittel (16) umfasst.

11. Sitz, insbesondere Kraftfahrzeugsitz, wenigstens umfassend ein Sitzgestell sowie wenigstens ein Sitzpolster (1),
**dadurch gekennzeichnet, dass**
das wenigstens eine Sitzpolster (1) nach einem der Ansprüche 1 bis 10. ausgebildet ist.

12. Sitz nach Anspruch 11, **dadurch gekennzeichnet, dass** das wenigstens eine Sitzpolster (1) als integraler Bestandteil des Fahrzeugsitzes ausgebildet ist und insbesondere in dem Fahrzeugsitz eingenäht ist.
